(19) **Europäisches Patentamt**

**European Patent Office**

**Office européen des brevets**

(11) Veröffentlichungsnummer: **0 324 951 B1**

(12) # EUROPÄISCHE PATENTSCHRIFT

(45) Veröffentlichungstag der Patentschrift: **15.07.92**

(21) Anmeldenummer: **88120996.9**

(22) Anmeldetag: **15.12.88**

Verbunden mit 89902202.4/0386156 (europäische Anmeldenummer/Veröffentlichungsnummer) durch Entscheidung vom 16.01.92.

(51) Int. Cl.5: **C09D 163/00**, C09D 5/44

(54) **Verfahren zur Beschichtung elektrisch leitfähiger Substrate, nach diesem Verfahren beschichtete Substrate und wässrige Elektrotauchlackbäder.**

(30) Priorität: **22.01.88 DE 3801787**

(43) Veröffentlichungstag der Anmeldung:
**26.07.89 Patentblatt 89/30**

(45) Bekanntmachung des Hinweises auf die Patenterteilung:
**15.07.92 Patentblatt 92/29**

(84) Benannte Vertragsstaaten:
**AT BE CH DE ES FR GB IT LI NL SE**

(56) Entgegenhaltungen:
**EP-A- 0 070 550**
**EP-A- 0 200 397**
**WO-A-86/05196**
**WO-A-86/07083**
**DE-A- 3 518 770**

(73) Patentinhaber: **BASF Lacke + Farben Aktiengesellschaft**
**Max-Winkelmann-Strasse 80**
**W-4400 Münster(DE)**

(72) Erfinder: **Ott, Günther, Dr.**
**Von-Holte-Strasse 101 a**
**W-4400 Münster(DE)**
Erfinder: **Reiter, Udo, Dr.**
**Regerstrasse 22**
**W-4404 Telgte(DE)**
Erfinder: **Jouck, Walter, Dr.**
**Grüner Weg 7**
**W-4400 Münster(DE)**
Erfinder: **Santure, David J., Dr.**
**Hummelbrink 13**
**W-4400 Münster(DE)**
Erfinder: **Rühl, Dieter, Dr.**
**Hittorfstrasse 57**
**W-4400 Münster(DE)**

EP 0 324 951 B1

**Beschreibung**

Die Erfindung betrifft ein Verfahren zum Beschichten elektrisch leitfähiger Substrate, bei dem

(1) das Substrat in ein wäßriges Elektrotauchlackbad, das ein kathodisch abscheidbares Kunstharz enthält, eingetaucht wird,

(2) das Substrat als Kathode geschaltet wird,

(3) durch Gleichstrom ein Film auf dem Substrat abgeschieden wird,

(4) das Substrat aus dem Elektrotauchlack entfernt wird und

(5) der abgeschiedene Lackfilm eingebrannt wird.

Die Erfindung betrifft auch nach dem erfindungsgemäßen Verfahren beschichtete Substrate und die in dem erfindungsgemäßen Verfahren eingesetzten Elektrotauchlackbäder.

Die oben beschriebene kathodische Elektrotauchlackierung ist ein vor allem zum Grundieren häufig angewandtes Lackierverfahren und wird insbesonsere zur Grundierung von Automobilkarosserien eingesetzt.

Verfahren der oben beschriebenen Art werden z. B. in folgenden Patentdokumenten offenbart: DE-OS-35 18 732, DE-OS-35 18 770, DE-OS-34 09 188, EP-A-4090 und EP-A-12463.

Mit Verfahren dieser Art können qualitativ hervorragende Lackierungen erzielt werden. Oft treten jedoch im eingebrannten Lackfilm dem Fachmann gut bekannte Oberflächenstörungen (insbesondere Krater) auf.

Es sind eine Reihe von Versuchen bekannt, das Auftreten von Oberflächenstörungen durch Zugabe von Additiven zu unterdrücken. Auf diese Weise können zwar die Oberflächenstörungen beseitigt werden, dafür treten aber in aller Regel auf Haftungsstörungen zurückzuführende Probleme in überlackierten Lackschichten (z. B. Füller und Decklack) auf. Derartige Probleme treten insbesondere in überlackierten Lackschichten, die Alkyldharze als Bindemittel enthalten, auf.

Die der vorliegenden Erfindung zugrundeliegende Aufgabenstellung besteht in der Bereitstellung eines neuen Verfahrens gemäß Oberbegriff des Patentanspruchs 1. Mit dem neuen Verfahren sollen insbesondere die oben dargelegten Probleme des Standes der Technik überwunden bzw. vermindert werden.

Diese Aufgabe wird überraschenderweise durch ein Verfahren gemäß Oberbegriff des Patentanspruchs 1 gelöst, das dadurch gekennzeichnet ist, daß das Elektrotauchlackbad mindestens 7,5 Gew.-% eines Polyoxyalkylenpolyamins oder eines Gemisches aus mehreren Polyoxyalkylenpolyaminen mit unterschiedlichen chemischen Strukturen enthält, wobei sich die Gew.-%-Angabe auf die im Elektrotauchlackbad enthaltene Gesamtmenge an Bindemitteln bezieht.

Die durch die Erfindung erreichten Vorteile sind im wesentlichen darin zu sehen, daß mit dem erfindungsgemäßen Verfahren Lackfilme erhalten werden können, die im Vergleich zu den Lackfilmen des Standes der Technik weniger und/oder schwächer ausgeprägte Oberflächenstörungen aufweisen und in überlackierten Lackschichten - insbesondere in überlackierten Lackschichten, die Alkydharze als Bindemittel enthalten, - keine auf Haftungsstörungen zurückzuführende Schäden verursachen.

Weitere wichtige, mit dem erfindungsgemäßen Verfahren erreichte Vorteile bestehen darin, daß die mit dem erfindungsgemäßen Verfahren erhaltenen Lackfilme im Vergleich zum Stand der Technik höhere Schichtdicken und höhere Elastizitäten aufweisen.

In der US-PS-3,975,250 werden in Elektrotauchlackbädern einsetzbare kationische reaktive Weichmacher offenbart, die durch Umsetzung von teilverkappten Polyisocyanaten mit Polyoxypropylendiaminen hergestellt werden. Ein vor der der vorliegenden Erfindung zugrundeliegenden Aufgabenstellung stehender Durchschnittsfachmann kann der US-PS-3,975,250 aber keinerlei Hinweise zur Lösung der Aufgabenstellung entnehmen.

In der US-PS-4,423,166 wird ein Elektrotauchlackierverfahren gemäß Oberbegriff des Patentanspruchs 1 offenbart, das dadurch gekennzeichnet ist, daß das Elektrotauchbad ein Addukt aus einem Polyoxyalkylenpolyamin und einem Polyepoxid als Antikratermittel enthält. Die mit dem in der US-PS-4,423,166 offenbarten Verfahren erhaltenen Lackfilme zeigen zwar eine geringere Neigung zur Bildung von Oberflächenstörungen, verursachen aber auf Haftungsstörungen zurückzuführende Schäden in überlackierten Lackschichten. Derartige Schäden treten insbesondere in überlackierten Lackschichten, die Alkydharze als Bindemittel enthalten, auf.

Die mit der vorliegenden Erfindung erreichten Vorteile sind um so überraschender, als in der US-PS-4,423,166 in Spalte 18 Elektrotauchlackbäder beschrieben werden, die - bezogen auf die im Elektrotauchlackbad enthaltene Gesamtmenge an Bindemitteln - bis zu 7,0 Gew.-% eines Polyoxyalkylenpolyamins enthalten, aber Lackfilme mit erheblichen Oberflächenstörungen liefern (vgl. table I in der US-PS-4,423,166).

Elektrotauchlackbäder für die kathodische Elektrotauchlackierung werden vorzugsweise hergestellt, indem zunächst einmal eine wäßrige Dispersion hergestellt wird, die ein kathodisch abscheidbares Kunstharz, gegebenenfalls ein Vernetzungsmittel und sonstige übliche Zusätze, wie z.B. Entschäumer usw.,

EP 0 324 951 B1

enthält.

In diese wäßrige Dispersion wird dann eine Pigmentpaste eingearbeitet.

Die Pigmentpaste besteht aus einem Reibharz und Pigmenten und/oder Füllstoffen. Die Pigmentpaste kann außerdem noch weitere Zusätze, wie z.B. Weichmacher, Netzmittel, Antioxidantien usw. enthalten.

Als Beispiele für Pigmente bzw. Füllstoffe, die in der Pigmentpaste enthalten sein können, werden genannt: Titandioxid, Antimonoxid, Zinkoxid, basisches Bleicarbonat, basisches Bleisulfat, Bariumcarbonat, Porzellan, Ton, Kalciumcarbonat, Aluminiumsilicat, Siliciumdioxid, Magnesiumcarbonat, Magnesiumsilikat, Cadmiumgelb, Cadmiumrot, Ruß, Phthalocyaninblau, Chromgelb, Toluidylrot und hydratisiertes Eisenoxid.

Die Herstellung von Pigmentpasten ist allgemein bekannt und braucht hier nicht näher erläutert zu werden (vgl. z.B. D.H. Parker, Principles of Surface Coating Technology, Intercience Publishers, New York (1965); R.L. Yates, Electropainting, Robert Draper Ltd., Teddington/England (1966); H.F. Payne, Organic Coating Technology, Band 2, Wiley and Sons, New York (1961)).

Die Pigmentpaste wird in einer solchen Menge zur oben beschriebenen wäßrigen Dispersion gegeben, daß das fertige Elektrotauchlackbad die für die Abscheidung erforderlichen Eigenschaften aufweist. In den meisten Fällen beträgt das Gewichtsverhältnis zwischen Pigment bzw. Füllstoff und der im Elektrotauchlackbad enthaltenen Gesamtmenge an kathodisch abscheidbarem Kunstharz 0,05 bis 0,5.

Nach der Vereinigung der wäßrigen Dispersion mit der Pigment paste und Einstellung eines geeigneten Feststoffgehaltes wird ein gebrauchsfertiges Elektrotauchlackbad erhalten.

Die erfindungsgemäß eingesetzten Elektrotauchlackbäder können prinizipiell alle für die Herstellung von Elektrotauchlackbädern geeigneten kathodisch abscheidbaren fremd-oder selbstvernetzenden Kunstharze enthalten. Die erfindungsgemäß eingesetzten Elektrotauchlackbäder können auch Mischungen unterschiedlicher kathodisch abscheidbarer Kunstharze enthalten.

Bevorzugt sind jedoch die Elektrotauchlackbäder, die kationische aminmodifizierte Epoxidharze als kathodisch abscheidbare Kunstharze enthalten. Es sind sowohl selbstals auch fremdvernetzende kationische aminmodifizierte Epoxidharze bekannt. Bevorzugt werden fremdvernetzende kationische aminmodifizierte Epoxidharze eingesetzt.

Unter kationischen aminmodifizierten Epoxidharzen werden kationische Reaktionsprodukte aus

(A) gegebenenfalls modifizierten Polyepoxiden und

(B) Aminen

verstanden.

Unter Polyepoxiden werden Verbindungen verstanden, die zwei oder mehr Epoxidgruppen im Molekül enthalten.

Besonders bevorzugte (A)-Komponenten sind Verbindungen, die herstellbar sind durch Umsetzung von

(a) einer Diepoxidverbindung oder eines Gemisches von Diepoxidverbindungen mit einem Epoxidäquivalentgewicht unter 2000 mit

(b) einer unter den gegebenen Reaktionsbedingungen gegenüber Epoxidgruppen monofunktionell reagierenden, eine Phenol-oder Thiolgruppe enthaltenden Verbindung oder eines Gemisches solcher Verbindungen,

wobei die Komponenten (a) und (b) in einem Molverhältnis von 10:1 bis 1:1, bevorzugt 4:1 bis 1,5:1, eingesetzt werden und die Umsetzung der Komponente (a) mit der Komponente (b) bei 100 bis 190°C gegebenenfalls in Anwesenheit eines Katalysators durchgeführt wird (vgl. DE-OS-35 18 770).

Weitere besonders bevorzugte (A)-Komponenten sind Verbindungen, die herstellbar sind durch eine bei 100 bis 195°C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2:1 bis 10:1 eingebaut sind (vgl. DE-OS-35 18 732).

Polyepoxide, die zur Herstellung der besonders bevorzugten (A)-Komponenten und auch selbst als (A)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4′-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentadiol, 1,2,6-Hexantriol, Glycerin und Bis-(4-hydroxycyclohexyl)-2,2-propan.

Es können auch Polyglycidylester von Polycarbonsäuren, wie z.B. Oxalsäure, Bernsteinsäure, Glutar-

3

säure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:

a) Carboxylgruppenhaltige Verbindungen wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

b) aminogruppenhaltige Verbindungen wie Diethylamin oder Ethylhexylamin oder Diamine mit sekundären Aminogruppen, z.B. N,N′-Dialkylalkylendiamine wie Dimethylethylendiamin, N,N′-Dialkyl-polyoxialkylenamine wie N,N′-dimethylpolyoxipropylendiamin, cyanalkylierte Alkylendiamine wie Bis-N,N′-Cyanethyl-ethylendiamin, cyanalkylierte Polyoxialkylenamine wie Bis-N,N′-Cyanethylpolyoxipropylendiamin, Polyaminoamide wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren, und Monocarbonsäuren, insbesondere Fettsäuren, oder das Umsetzungsprodukt von einem Mol Diaminohexan mit zwei Molen Monoglycidylether oder Monoglycidylester, speziell Glycidylester $\alpha$-verzweigter Fettsäuren wie der Versaticsäure, oder

c) hydroxylgruppenhaltige Verbindungen wie Neopentylglykol, Bis-ethoxiliertes Neopentylglykol, Hydroxipivalinsäureneopentylglykolester, Dimethylhydantoin-N,N′-diethanol, Hexandiol-1,6, Hexandiol-2,5, 1,4-Bis-(hydroximethyl)-cyclohexan, 1,1-Isopropyliden-bis-(p-phenoxi)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin oder Tris-(hydroximethyl)-aminomethancyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Als Komponente (B) können primäre oder sekundäre Amine bzw. deren Salze, Salze von tertiären Aminen oder Gemische aus diesen Verbindungen eingesetzt werden.

Vorzugsweise werden wasserlösliche Amine als (B)-Komponente eingesetzt. Als Beispiele für einsetzbare Amine werden Mono- und Dialkylamine, wie Methylamin, Ethylamin, Propylamin, Butylamin, Dimethylamin, Diethylamin, Dipropylamin, Methylbutylamin usw. genannt. Es können auch Alkanolamine, wie z.B. Methylethanolamin und Diethanolamin als (B)-Komponenten eingesetzt werden. Auch Ketimine von Polyaminen mit primären und sekundären Aminogruppen können als (B)-Komponente eingesetzt werden. Ferner sind auch Dialkylaminoalkylamine, wie zum Beispiel Dimethylaminoethylamin, Diethylaminopropylamin und Dimethylaminopropylamin als (B)-Komponente brauchbar.

In den meisten Fällen werden niedermolekulare Amine als (B)-Komponenten verwendet. Es ist jedoch auch möglich, höhermolekulare Monoamine einzusetzen.

Bevorzugt werden sekundäre Amine als (B)-Komponenten eingesetzt.

In vielen Fällen werden als Komponente (B) mehrere unterschiedliche Amine eingesetzt.

Die für die Wasserverdünnbarkeit und elektrische Abscheidbarkeit erforderlichen positiven Ladungen können durch Protonierung mit wasserlöslichen Säuren (z.B. Borsäure, Ameisensäure, Milchsäure, vorzugsweise Essigsäure) und/oder durch die Verwendung von Aminsalzen als (B)-Komponenten in die Bindemittelmoleküle eingeführt werden.

Die erfindungsgemäß eingesetzten kationischen aminmodifizierten Epoxidharze sind im wesentlichen epoxidgruppenfrei, d.h. ihr Epoxidgruppengehalt ist so niedrig, daß weder vor noch nach der Abscheidung des Lackfilmes Vernetzungsreaktionen über Epoxidgruppen ablaufen können. Die erfindungsgemäß eingesetzten kationischen aminmodifizierten Epoxidharze enthalten vorzugsweise keinerleifreie Epoxidgruppen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes kationisches aminmodifiziertes Epoxidharz kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugte Elektrotauchlackbäder werden erhalten, wenn als kathodisch abscheidbare Kunstharze fremdvernetzende kationische aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel $R^1$-O-CO- enthalten.

Der Rest $R^1$ bedeutet:

$R^1 =$ $R^2$O-CO-CH$_2$-, $R^3$-CHOH-CH$_2$-, $R^4$-CHOR$^5$-CHOH-CH$_2$-

$R^2 =$ Alkyl

$R^3 =$ H, Alkyl, $R^6$-O-CH$_2$ oder $R^6$-CO-O-CH$_2$-

$R^4 =$ H oder Alkyl

$R^5 =$ H, Alkyl oder Aryl

$R^6 =$ Alkyl, Cycloalkyl oder Aryl

Bevorzugte Elektrotauchlackbäder werden erhalten, wenn als Vernetzungsmittel blockierte Polyisocyanate und/oder Verbindungen, die mindestens zwei Gruppierungen der allgemeinen Formel $R^1$-O-CO- enthalten, eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole wie Cyclopentanol und Cyclohexanol; aromatische Alkylalkohole, wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Beispiele für Verbindungen, die mindestens zwei Gruppierungen der allgemeinen Formel $R^1$-O-CO- enthalten, sind Bis-(carbalkoxymethyl)azelat, Bis-(carbalkoxymethyl)sebacat, Bis-(carbalkoxymethyl)adipat, Bis-(carbalkoxymethyl)decanat, Bis-(carbalkoxymethyl)terephthalat, Bis-(2-hydroxybutyl)-acelat und bis-(2-hydroxyethyl)terephthalat.

Das Vernetzungsmittel wird in der Regel in einer Menge von 5 bis 60 Gew.-%, bevorzugt 20 bis 40 Gew.-%, bezogen auf die im Elektrotauchlack enthaltene Gesamtmenge an vernetzbarem kathodisch abscheidbaren Kunstharz, eingesetzt.

Es ist erfindungswesentlich, daß bei dem erfindungsgemäßen Verfahren Elektrotauchlackbäder eingesetzt werden, die mindestens 7,5 Gew.-% eines Polyoxyalkylenpolyamins oder eines Gemisches aus mehreren Polyoxyalkylenpolyaminen mit unterschiedlichen chemischen Strukturen enthalten, wobei sich die Gew.-%-Angabe auf die im Elektrotauchlackbad enthaltene Gesamtmenge an Bindemitteln bezieht.

Unter Polyoxyalkylenpolyaminen werden Verbindungen verstanden, die sowohl Oxyalkylengruppen als auch mindestens zwei Aminogruppen, vorzugsweise mindestens zwei primäre Aminogruppen, enthalten. Die Polyoxyalkylenpolyamine sollten ein zahlenmittleres Molekulargewicht von etwa 137 bis 3600, vorzugsweise 400 bis 3000, besonders bevorzugt 800 bis 2500, aufweisen. Außerdem sollten die Polyoxyalkylenpolyamine ein Aminäquivalentgewicht von etwa 69 bis etwa 1800, vorzugsweise 200 bis 1500, besonders bevorzugt 400 bis 1250 aufweisen.

Bevorzugt eingesetzte Polyoxyalkylenpolyamine weisen eine chemische Struktur gemäß der allgemeinen Formel (I) auf

H$_2$N-CHR-CH$_2$-O-(-CHR-CH$_2$-O-)$_n$-CH$_2$-CHR-NH$_2$     (I)

wobei bedeuten

    R =     H oder Alkylrest mit 1 bis 6 C-Atomen, vorzugsweise -CH$_3$

    n =     5 - 60, vorzugsweise 20-40

    Polyoxyalkylenpolyamine, die eine chemische Struktur gemäß der allgemeinen Formel (I) aufweisen, werden in der US-PS-3,236,895 in Spalte 2, Zeilen 40-72, offenbart. Verfahren zur Herstellung dieser Polyoxyalkylenpolyamine werden in den in den Spalten 4 bis 9 der US-PS-3,236,895 zu findenden Patentbeispielen 4, 5, 6 und 8 bis 12 offenbart.

    Es können auch Polyoxyalkylenpolyamine eingesetzt werden, die unterschiedliche Oxyalkylengruppen enthalten, beispielsweise Polyoxyalkylenpolyamine, die eine chemische Struktur gemäß der allgemeinen Formel (II) aufweisen:

H$_2$N-CH(CH$_3$)-CH$_2$-(O-CH(CH$_3$)-CH$_2$)$_n$-(O-CH$_2$-CH$_2$-)$_m$-O-CH$_2$-CH(CH$_3$)-NH$_2$     (II)

worin bedeuten

    n + m =     5 bis 60, vorzugsweise 20 bis 40

    m =         1 bis 59, vorzugsweise 5 bis 30

    n =         1 bis 59, vorzugsweise 5 bis 30

    Es können auch Polyoxyalkylenpolyaminderivate eingesetzt werden, die durch Umsetzung der in der US-PS-3,236,895 in Spalte 2, Zeilen 40-72 beschriebenen Polyoxyalkylenpolyamine mit Acrylnitril und nachfolgender Hydrierung des Reaktionsproduktes erhältlich sind.

Diese Derivate haben eine chemische Struktur gemäß der allgemeinen Strukturformel (III):

H$_2$N-(CH$_2$)$_3$-NH-CHR-CH$_2$-O-(-CHR-CH$_2$-O-)$_n$-CH$_2$-CHR-NH-(CH$_2$)$_3$-NH$_2$     (III)

worin bedeuten

    R =     H oder ein Alkylrest mit 1 bis 6 Kohlenstoffatomen, vorzugsweise -CH$_3$

    n =     5 bis 60, vorzugsweise 20 bis 40

    Es ist selbstverständlich, daß die erfindungsgemäß eingesetzten Elektrotauchlackbäder auch ein Gemisch aus mehreren Polyoxyalkylenpolyaminen mit unterschiedlichen chemischen Strukturen enthalten können.

    Die Polyoxyalkylenpolyamine bzw. Polyoxyalkylenpolyamingemische können zu jedem Zeitpunkt der Herstellung und auch nach Fertigstellung der Elektrotauchlackbäder in die Elektrotauchlackbäder eingearbeitet werden. Die Polyoxyalkylenpolyamine bzw. Polyoxyalkylenpolyamingemische werden vorzugsweise zur wäßrigen Dispersion bzw. zu einer Vorstufe der wäßrigen Dispersion, die ein kathodisch abscheidbares Kunstharz, ggf. ein Vernetzungsmittel und sonstige übliche Züsatze wie z.B. Entschäumer usw. enthält (vgl. S. 4 , Zeilen 19ff.) oder zur Pigmentpaste bzw. zu einer Vorstufe der Pigmentpaste (vgl. S.4 , Zeilen 26ff.) zugegeben. Die Polyoxyalkylenpolyaminmoleküle werden aller Wahrscheinlichkeit nach von der in der wäßrigen Dispersion bzw. Pigmentpaste enthaltenen Säure protoniert.

    Es ist aber auch möglich, das entsprechende Polyoxyalkylenpolyamin bzw. Polyoxyalkylenpolyamingemisch in protonierter Form zu der in Rede stehenden wäßrigen Dispersion bzw. zu einer Vorstufe dieser Dispersion oder zur Pigmentpaste bzw. einer Vorstufe der Pigmentpaste zuzugeben. Das protonierte Polyoxyalkylenpolyamin bzw. Polyoxyalkylenpolyamingemisch kann durch einfache Zugabe einer Brönstedsäure zu dem entsprechenden Polyoxyalkylenpolyamin bzw. Polyoxyalkylenpolyamingemisch erhalten werden. Die im fertigen Elektrotauchlackbad enthaltene Gesamtmenge an Brönstedsäure ist so zu wählen, daß der pH-Wert des Elektrotauchlackbades zwischen 4 und 8, vorzugsweise zwischen 5 und 7,5 liegt.

    Es ist erfindungswesentlich, daß die in den erfindungsgemäß eingesetzten Elektrotauchlackbädern enthaltene Menge an Polyoxyalkylenpolyamin bzw. Polyoxyalkylenpolyamingemisch mindestens 7,5 Gew.-% beträgt, wobei sich die Gew.-%-Angabe auf die im Elektrotauchlackbad enthaltene Gesamtmenge an Bindemitteln bezieht. Mit anderen Worten ausgedrückt bedeutet das, daß die erfindungsgemäß eingesetzten Elektrotauchlackbäder auf 100 Gewichtsteile Bindemittel mindesten 7,5 Gew.-Teile Polyoxyalkylenpolyamin oder polyoxyalkylenpolyamingemisch enthalten müssen. Bei Verwendung von Elektrotauchlackbädern mit einem niedrigeren Gehalt an Polyoxyalkylenpolyamin bzw. Polyoxyalkylenpolyamingemisch werden Lackfilme mit erheblich mehr und/oder erheblich stärker ausgeprägten Oberflächenstörungen erhalten als bei Verwendung der erfindungsgemäßen Elektrotauchlackbäder.

    Die Obergrenze der in den erfindungsgemäß eingesetzten Elektrotauchlackbädern enthaltenen Menge an Polyoxyalkylenpolyamin bzw. Polyoxyalkylenpolyamingemisch wird durch die weichmachende Wirkung des zugesetzten Polyoxyalkylenpolyamins bzw. Polyoxyalkylenpolyamingemisches bestimmt und liegt im allgemeinen bei 20 bis 40 Gew.-%, wobei sich die Gew.-%-Angabe auf die im Elektrotauchlackbad enthaltene Gesamtmenge an Bindemitteln bezieht.

Die erfindungsgemäß eingesetzten Elektrotauchlackbäder enthalten vorzugsweise 8 bis 18, besonders bevorzugt 10 bis 15 Gew.-% Polyoxyalkylenpolyamin bzw. Polyoxyalkylenpolyamingemisch, wobei die Gewichtsprozentangaben auf die im Elektrotauchlackbad enthaltene gesamtmenge an Bindemitteln bezogen sind.

Die im Elektrotauchlackbad enthaltene Gesamtmenge an Bindemitteln wird ermittelt, indem die im Elektrotauchlackbad enthaltene Menge an kathodisch abscheidbarem Kunstharz, die im Elektrotauchlackbad ggf. enthaltene Menge an Vernetzungsmitteln, die im Elektrotauchlackbad enthaltene Menge an Reibharz und die im Elektrotauchlackbad ggf. außerdem noch vorhandene Menge an unter den Einbrennbedingungen vernetzendern Harzen addiert werden.

Der Festkörper der erfindungsgemäß eingesetzten Elektrotauchlackbäder beträgt vorzugsweise 7 bis 35 Gew.-Teile, besonders bevorzugt 12 bis 25 Gew.-Teile.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 35 °C, bevorzugt zwischen 20 bis 30°C liegen.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m$^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung von wäßrigen Dispersionen, die ein kathodisch abscheidbares Kunstharz und ein Vernetzungsmittel enthalten.

1.1. Herstellung eines aminmodifizierten Epoxidharzes

In einem Reaktionsgefäß werden 1780 g Epikote 1001[1)], 280 g Dodecylphenol und 105 g Xylol vorgelegt und unter Stickstoffatmosphäre bei 120°C aufgeschmolzen. Anschließend werden unter leichtem Vakuum Wasserspuren durch Auskreisen entfernt. Dann gibt man 3 g N,N-Dimethylbenzylamin zu, erwärmt die Reaktionsmischung auf 130°C und hält diese Temperatur für ca. 3 h, bis das Epoxidäquivalentgewicht (EEW) auf 1162 angestiegen ist. Sodann kühlt man und gibt in rascher Abfolge 131 g Hexylglykol, 131 g Diethanolamin und 241 g Xylol zu. Dabei steigt die Temperatur leicht an. Danach läßt man das Reaktionsgemisch auf 90°C abkühlen und gibt zur weiteren Verdünnung 183 g Butylglykol und 293 g Isobutanol zu. Wenn die Temperatur auf 70°C gefallen ist, gibt man 41 g N,N-Dimethylaminopropylamin zu, hält diese Temperatur für 3 h und trägt aus.

Das Harz hat einen Festgehalt von 70,2 % und einem Basengehalt von 0,97 Milliäquivalenten/Gramm.

1.2 Herstellung eines Vernetzungsmittels

In einem Reaktionsgefäß werden unter Stickstoffatmosphäre 1.129 g Toluylendiisocyanat (handelsübliches Isomerengemisch aus 2,4- und 2,6-Isomer) zusammen mit 490 g Methylisobutylketon vorgelegt. Unter Rühren werden 0,6 g Dibutylzinndilaurat mit anschließend 290 g Trimethylolpropan in kleinen Portionen so zugegeben, daß bei äußerer Kühlung die Innentemperatur 50 °C nicht übersteigt (Dauer ca. 2h). Der Ansatz wird unter Kühlung noch so lange nachgerührt, bis das NCO-Äquivalentgewicht den Wert 215 erreicht hat. Dann läßt man 675 g Ethylenglykolmonopropylether in einer solchen Geschwindigkeit zutropfen, daß die Innentemperatur nicht über 100°C steigt. Man hält die Temperatur anschließend noch 1 Std. bei 100°C, verdünnt mit 362 g Methylisobutylketon und 10 g n-Butanol und trägt anschließend nach kurzer Kühlung aus. Das Harz hat einen Festkörpergehalt

1) Epoxidharz der Fa. Shell mit einem Epoxidäquivalentgewicht von 500.

von 71,8 % (1 h bei 130°C) und eine Viskosität von 1,5 dPas (50%ige Lösung in Methylisobutylketon, gemessen am Platte-Kegel-Viskosimeter).

1.3 Herstellung der wäßrigen Dispersionen

1.3.1 Dispersion (I)

915 g Harz gemäß Pkt. 1.1 und 493 g Vernetzer gemäß Pkt. 1.2 und 134 g eines Polyoxypropylendiamins mit der Formel

$$H_2N-CH(CH_3)-CH_2-(-OCH_2-CH(CH_3))_x-NH_2$$

x = 33,1

(Jeffamine® D 2000, Handelsprodukt der Firma Texaco Chemical Company) werden bei Raumtemperatur gemischt und gerührt. Sobald die Lösung homogen geworden ist, werden 2,2 g einer Entschäumerlösung[1] und 22 g Eisessig eingerührt und 674 g entionisiertes Wasser über 6 Portionen verteilt zugegeben. Anschließend wird mit weiteren 960 g entionisiertem Wasser in kleinen Portionen verdünnt.

Die resultierende wässrige Dispersion wird in einer Vakuumdestilation von niedrigsiedenden Lösemitteln befreit und anschließend mit entionisiertem Wasser auf einen Festkörper von 33 % verdünnt.

1.3.2 Dispersion (II)

Es wird wie unter Pkt. 1.3.1 verfahren, mit dem Unterschied, daß anstelle von 134 g Polyoxypropylendiamin 67 g Polyoxypropylendiamin eingesetzt werden.

1.3.3 Dispersion (III)

Es wird wie unter Pkt. 1.3.1 verfahren, mit dem Unterschied, daß kein Polyoxypropylendiamin eingesetzt wird. Zur Einstellung des Festkörpers von 33 % wird nach der Vakuumdestilation entsprechend weniger entionisiertes Wasser zugegeben.

2. Herstellung einer Pigmentpaste

2.1 Herstellung eines Reibharzes gemäß DE-OS-34 22 457

640 Teile eines Diglycidylethers auf Basis von Bisphenol A und Epichlorhydrin mit einem Epoxid-Äquivalentgewicht von 485 und 160 Teile eines solchen mit einem Epoxid-Äquivalentgewicht von 189 werden bei 100°C gemischt. In einem weiteren Gefäß werden 452 Teile Hexamethylendiamin vorgelegt, auf 100°C erhitzt und 720 Teile der obigen heißen Epoxidharzmischung innerhalb einer Stunde zugegeben, wobei leicht gekühlt werden muß, um die Temperatur bei 100°C zu halten. Nach weiteren 30 min wird unter Temperaturerhöhung und vermindertem Druck das überschüssige Hexamethylendiamin abgezogen, wobei zum Schluß eine Temperatur von 205°C und ein Druck von 30 mbar erreicht wird. Anschließend werden 57,6 Teile Stearinsäure, 172,7 Teile Dimerfettsäure und 115 Teile Xylol zugesetzt. Dann wird innerhalb von 90 min. bei 175 bis 180°C das gebildete Wasser azeotrop abdestilliert. Anschließend werden 58 Teile Butylglykol und 322 Teile Isobutanol zugefügt. Das Produkt hat einen Feststoffgehalt von 70 % und eine Viskosität, gemessen bei 75°C mit einem Platten-Kegel-Viskosimeter, von 2240 mPas.

2.2 Herstellung der Pigmentpaste

586 Teile des Reibharzes werden mit 1162 Teilen entionisiertem Wasser und 22 Teilen Eisessig intensiv vermischt. Anschließend wird mit 880 Teilen $TiO_2$, 250 Teilen eines Extenders auf Basis Aluminiumsilikat, 53 Teilen Bleisilikat und 10 Teilen Ruß vermengt. Diese Mischung wird in einem Mahlaggregat auf eine Hegman-Feinheit von kleiner 12 µm zerkleinert. Danach gibt man entionisiertes Wasser zu, um die gewünschte Pastenkonsistenz zu erreichen.

3. Zubereitung erfindungsgemäßer Elektrotauchlackbäder und Abscheidungen

2200 Gewichtsteile der Dispersionen gemäß Pkt. 1.3 werden mit 700 Teilen der Pigmentpaste gemäß Pkt. 2.2 versetzt und mit entionisiertem Wasser auf einen Badfestkörper von 20 Gew.-% eingestellt. Die Abscheidung der Lackfilme erfolgt während 2 min bei 300 V auf phosphatiertem Blech. Die Badtemperatur beträgt 27°C. Die Filme werden bei 165°C 20 min eingebrannt.

Elektrotauchlackbad 1:    Dispersion gemäß Pkt. 1.3.1 mit Paste gemäß Pkt. 2.2
Polyoxypropylendiamingehalt (bezogen auf Gesamtmenge an Bindemitteln): 11,9 Gew.-%

Elektrotauchlackbad 2:    Dispersion gemäß Pkt. 1.3.2 mit Paste gemäß Pkt. 2.2
Polyoxypropylendiamingehalt (bezogen auf Gesamtmenge an Bindemitteln):

1) Surfynol (Handelsprodukt der Air Chemicals), 50%ige Lösung in Ethylenglykolmonobutylether

6,0 Gew.-%
Elektrotauchlackbad 3: Dispersion gemäß Pkt. 1.3.3 mit Paste gemäß Pkt. 2.2
Polyoxypropylendiamingehalt: 0 Gew.-%

Abscheideergebnisse

| Elektrotauchlackbad | 1 | 2 | 3 |
|---|---|---|---|
| Schichtdicke ($\mu$m) | 27 | 20 | 16 |
| Verlauf[1] | 1,5 | 2,5 | 1,5 |
| Krater/dm$^2$ | 1 | 20 | 10 |

1) Note 0 - 5 (gut - schlecht)

Diese Filme wurden nun mit einem handelsüblichen Wasserfüller und einem weißen Alkyddecklack überlackiert und 240 h im Schwitzwasser-Konstant-Klima getestet. Danach wurde die Haftung der Filme mittels Gitterschnitt und Tesaabriß geprüft.

| Elektrotauchlackbad | 1 | 2 | 3 |
|---|---|---|---|
| Haftung [1] | 0,5 | 0,5 | 0,5 |

1) Note 0 - 5 (gut - schlecht)

**Patentansprüche**

1. Verfahren zur Beschichtung elektrisch leitfähiger Substrate, bei dem
(1) das Substrat in ein wäßriges Elektrotauchlackbad, das ein kationisches, aminmodifiziertes Epoxidharz enthält, eingetaucht wird
(2) das Substrat als Kathode geschaltet wird,
(3) durch Gleichstrom ein Film auf dem Substrat abgeschieden wird,
(4) das Substrat aus dem Elektrotauchlackbad entfernt wird und
(5) der abgeschiedene Lackfilm eingebrannt wird,
dadurch gekennzeichnet, daß das Elektrotauchlackbad mindestens 7,5 Gew.-% eine Polyoxyalkylenpolyamins der allgemeinen Formel (I)

$$H_2N-CHR-CH_2-O-(-CHR-CH_2-O-)_n-CH_2-CHR-NH_2 \qquad (I)$$

wobei bedeuten
R = H oder Alkylrest mit 1 bis 6 C-Atomen
n = 5 bis 60
oder mindestens 7,5 Gew.-% eines Polyoxyalkylenpolyamins der allgemeinen Formel (II)

$$H_2N-CH(CH_3)-CH_2-(O-CH(CH_3)-CH_2)_n-(O-CH_2-CH_2)_m-O-CH_2-CH(CH_3)-NH_2 \qquad (II)$$

wobei
n + m = 5 bis 60
m = 1 bis 59
n = 1 bis 59
oder mindestens 7,5 Gew.-% eines Polyoxyalkylenpolyamins der allgemeinen Formel (III)

$$H_2N-(CH_2)_3-NH-CHR-CH_2-O-(-CHR-CH_2-O-)_n-CH_2-CHR-NH-(CH_2)_3-NH_2 \qquad (III)$$

wobei bedeuten
R = H oder Alkylrest mit 1 bis 6 C-Atomen
n = 5 bis 60

oder mindestens 7,5 Gew.-% einer Mischung aus Polyoxyalkylenpolyaminen der allgemeinen Formeln (I) und/oder (II) und/oder (III) enthält, wobei sich die Gew.-%-Angaben auf die im Elektrotauchlackbad enthaltene Gesamtmenge an Bindemitteln bezieht.

2. Verfahren nach Anspruch 1, dadurch gekennzeichnet, daß in den allgemeinen Formeln (I) und (III)
R = H oder -CH$_3$
n = 20 bis 40
und daß in der allgemeinen Formel (II)
n + m = 20 bis 40
m = 5 bis 30
n = 5 bis 30

3. Substrat, beschichtet nach einem Verfahren gemäß Anspruch 1 oder 2.

4. Kationische, aminmodifizierte Epoxidharze enthaltende wäßrige Elektrotauchlackbäder, dadurch gekennzeichnet, daß sie mindestens 7,5 Gew.-% eines Polyoxyalkylenpolyamins der allgemeinen Formel (I)

$$H_2N-CHR-CH_2-O-(-CHR-CH_2-O-)_n-CH_2-CHR-NH_2 \qquad (I)$$

wobei bedeuten
R = H oder Alkylrest mit 1 bis 6 C-Atomen
n = 5 bis 60
oder mindestens 7,5 Gew.-% eines Polyoxyalkylenpolyamins der allgemeinen Formel (II)

$$H_2N-CH(CH_3)-CH_2-(O-CH(CH_3)-CH_2-)_n-(O-CH_2-CH_2-)_m-O-CH_2-CH(CH_3)-NH_2 \qquad (II)$$

wobei
n + m = 5 bis 60
m = 1 bis 59
n = 1 bis 59
oder mindestens 7,5 Gew.-% eines Polyoxyalkylenpolyamins der allgemeinen Formel (III)

$$H_2N-(CH_2)_3-NH-CHR-CH_2-O-(-CHR-CH_2-O-)_n-CH_2-CHR-NH-(CH_2)_3-NH_2 \qquad (III)$$

wobei bedeuten
R = H oder Alkylrest mit 1 bis 6 C-Atomen
n = 5 bis 60
oder mindestens 7,5 Gew.-% einer Mischung aus Polyoxyalkylenpolyaminen der allgemeinen Formeln (I) und/oder (II) und/oder (III) enthalten, wobei sich die Gew.-%-Angaben auf die im Elektrotauchlackbad enthaltene Gesamtmenge an Bindemitteln bezieht.

5. Elektrotauchlackbäder nach Anspruch 4, dadurch gekennzeichnet, daß in den allgemeinen Formeln (I) und (III)
R = H oder -CH$_3$
n = 20 bis 40
und daß in der allgemeinen Formel (II)
n + m = 20 bis 40
m = 5 bis 30
n = 5 bis 30

## Claims

1. Process for coating electrically conducting substrates, in which process
    (1) the substrate is immersed in an aqueous electrocoating bath which contains a cationic, amine-modified epoxy resin,
    (2) the substrate is connected as cathode,
    (3) a film is deposited on the substrate by the action of direct current,
    (4) the substrate is removed from the electrocoating bath and

(5) the deposited paint film is baked,

characterised in that the electrocoating bath contains at least 7.5 % by weight of a polyoxyalkylenepolyamine of the general formula (I)

$$H_2N-CHR-CH_2-O-(-CHR-CH_2-O-)_n-CH_2-CHR-NH_2 \quad (I)$$

in which

R denotes H or an alkyl radical of 1 to 6 carbon atoms

n denotes 5 to 60

or at least 7.5 % by weight of a polyoxyalkylenepolyamine of the general formula (II)

$$H_2N-CH(CH_3)-CH_2-(O-CH(CH_3)-CH_2)_n-(O-CH_2-CH_2)_m-O-CH_2-CH(CH_3)-NH_2 \quad (II)$$

in which

n + m denotes 5 to 60

m denotes 1 to 59

n denotes 1 to 59

or at least 7.5 % by weight of a polyoxyalkylenepolyamine of the general formula (III)

$$H_2N-(CH_2)_3-NH-CHR-CH_2-O-(-CHR-CH_2-O-)_n-CH_2-CHR-NH-(CH_2)_3-NH_2 \quad (III)$$

in which

R denotes H or an alkyl radical of 1 to 6 carbon atoms,

n denotes 5 to 60

or at least 7.5 % by weight of a mixture consisting of polyoxyalkylenepolyamines of the general formulae (I) and/or (II) and/or (III), the % by weight data referring to the total amount of binders contained in the electrocoating bath.

2. Process according to Claim 1, characterized in that in the general formulae (I) and (III)

R denotes H or -CH_3

n denotes 20 to 40

and in that in the general formula (II)

n + m denotes 20 to 40

m denotes 5 to 30

n denotes 5 to 30

3. Substrate coated by a process according to Claim 1 or 2.

4. Aqueous electrocoating baths containing cationic, amine-modified epoxy resins, characterized in that the said baths contain at least 7.5 % by weight of a polyoxyalkylenepolyamine of the general formula (I)

$$H_2N-CHR-CH_2-O-(-CHR-CH_2-O-)_n-CH_2-CHR-NH_2 \quad (I)$$

in which

R denotes H or an alkyl radical of 1 to 6 carbon atoms

n denotes 5 to 60

or at least 7.5 % by weight of a polyoxyalkylenepolyamine of the general formula (II)

$$H_2N-CH(CH_3)-CH_2-(O-CH(CH_3)-CH_2-)_n-(O-CH_2-CH_2-)_m-O-CH_2-CH(CH_3)-NH_2 \quad (II)$$

in which

n + m denotes 5 to 60

m denotes 1 to 59

n denotes 1 to 59

or at least 7.5 % by weight of a polyoxyalkylenepolyamine of the general formula (III)

$$H_2N-(CH_2)_3-NH-CHR-CH_2-O-(-CHR-CH_2-O-)_n-CH_2-CHR-NH-(CH_2)_3-NH_2 \quad (III)$$

EP 0 324 951 B1

in which
R denotes H or an alkyl radical of 1 to 6 carbon atoms,
n denotes 5 to 60
or at least 7.5 % by weight of a mixture consisting of polyoxyalkylenepolyamines of the general formulae (I) and/or (II) and/or (III), the % by weight data referring to the total amount of binders contained in the electrocoating bath.

5. Electrocoating baths according to Claim 4, characterized in that in the general formulae (I) and (III)
R denotes H or -CH$_3$
n = 20 to 40
and in that in the general formula (II)
n + m denotes 20 to 40
m denotes 5 to 30
n denotes 5 to 30

**Revendications**

1.  Procédé pour le revêtement de substrats conducteurs de l'électricité, suivant lequel :
    (1) le substrat est plongé dans un bain aqueux de laquage par électrodéposition, qui contient une résine époxydique cationique, modifiée par une amine ;
    (2) le substrat est monté en cathode ;
    (3) un film est déposé sur le substrat par application de courant continu ;
    (4) le substrat est retiré du bain de laquage par électrodéposition ; et
    (5) le film de laque déposé est soumis à une cuisson,
    caractérisé par le fait que le bain de laquage par électrodéposition contient
    au moins 7,5% en poids d'une polyoxyalkylènepolyamine représentée par la formule générale (I) :

    H$_2$N-CHR-CH$_2$-O-(-CHR-CH$_2$-O-)$_n$-CH$_2$-CHR-NH$_2$     (I)

    dans laquelle :
    -  R = H ou reste alkyle ayant 1 à 6 atomes de carbone ;
    -  n = 5 à 60 ;
    ou au moins 7,5% en poids d'une polyoxyalkylènepolyamine représentée par la formule générale (II) :

    H$_2$N-CH(CH$_3$)-CH$_2$-(O-CH(CH$_3$)-CH$_2$-)$_n$-(O-CH$_2$-CH$_2$-)$_m$-O-CH$_2$-CH(CH$_3$)-NH$_2$     (II)

    dans laquelle :
    -  n + m = 5 à 60 ;
    -  m = 1 à 59 ;
    -  n = 1 à 59 ;
    ou au moins 7,5% en poids d'une polyoxyalkylènepolyamine représentée par la formule générale (III) :

    H$_2$N-(CH$_2$)$_3$-NH-CHR-CH$_2$-O-(-CHR-CH$_2$-O-)$_n$-CH$_2$-CHR-NH-(CH$_2$)$_3$-NH$_2$     (III)

    dans laquelle :
    -  R = H ou reste alkyle ayant 1 à 6 atomes de carbone ;
    -  n = 5 à 60 ;
    ou au moins 7,5% en poids d'un mélange de polyoxyalkylènepolyamines des formules générales (I) et/ou (II) et/ou (III), les données en % en poids se rapportant à la quantité totale de liants contenue dans le bain de laquage par électrodéposition.

2.  Procédé selon la revendication 1, caractérisé par le fait que, dans les formules générales (II) et (III) :
    -  R = H ou -CH$_3$ ;
    -  n = 20 à 40 ;
    et que, dans la formule générale (II) :
    -  n + m = 20 à 40 ;
    -  m = 5 à 30 ;

12

- n = 5 à 30.

3. Substrat revêtu par un procédé tel que défini à l'une des revendications 1 ou 2.

4. Bains aqueux de laquage par électrodéposition contenant des résines époxydiques cationiques, modifiées par une amine, caractérisés par le fait qu'ils contiennent au moins 7,5% en poids d'une polyoxyalkylènepolyamine représentée par la formule générale (I) :

$$H_2N-CHR-CH_2-O-(-CHR-CH_2-O-)_n-CH_2-CHR-NH_2 \qquad (I)$$

dans laquelle :
- R = H ou reste alkyle ayant 1 à 6 atomes de carbone ;
- n = 5 à 60 ;

ou au moins 7,5% en poids d'une polyoxyalkylènepolyamine représentée par la formule générale (II) :

$$H_2N-CH(CH_3)-CH_2-(O-CH(CH_3)-CH_2-)_n-(O-CH_2-CH_2-)_m-O-CH_2-CH(CH_3)-NH_2 \qquad (II)$$

dans laquelle :
- n + m = 5 à 60 ;
- m = 1 à 59 ;
- n = 1 à 59 ;

ou au moins 7,5% en poids d'une polyoxyalkylènepolyamine représentée par la formule générale (III) :

$$H_2N-(CH_2)_3-NH-CHR-CH_2-O-(-CHR-CH_2-O-)_n-CH_2-CHR-NH-(CH_2)_3-NH_2 \qquad (III)$$

dans laquelle :
- R = H ou reste alkyle ayant 1 à 6 atomes de carbone ;
- n = 5 à 60 ;

ou au moins 7,5% en poids d'un mélange de polyoxyalkylènepolyamines des formules générales (I) et/ou (II) et/ou (III), les données en % en poids se rapportant à la quantité totale de liants contenue dans le bain de laquage par électrodéposition.

5. Bains de laquage par électrodéposition selon la revendication 4, caractérisés par le fait que, dans les formules générales (II) et (III) :
- R = H ou -CH$_3$ ;
- n = 20 à 40 ;

et que, dans la formule générale (II) :
- n + m = 20 à 40 ;
- m = 5 à 30 ;
- n = 5 à 30.